# EUROPEAN PATENT APPLICATION

(11) **EP 3 869 400 A1**
(43) Date of publication of application: **25.08.2021**
(21) Application number: 21275017.8
(22) Date of filing: 19.02.2021
(51) Int. Cl.: G06K 9/00, G06K 9/20, G06K 9/34, G06K 9/62, G06K 9/46

(54) **OBJECT IDENTIFICATION SYSTEM AND COMPUTER-IMPLEMENTED METHOD**

(30) Priority: 19.02.2020 GB 202002266
(71) Applicant: NW PRO Limited, Flitton, Bedfordshire MK45 5EA (GB)
(72) Inventor: Richards, Jay, Flitton, Bedfordshire MK45 5EA (GB)
(74) Representative: Williams Powell

(57) **Abstract**

An object identification system and computer implemented method are described. The system includes a classification database encoding data on each of a plurality of pre-classified objects, an imaging input interface configured to receive imaging data of an object from an imaging scanner, the imaging data including imaging data on internal components of the object, an imaging processor configured to receive the imaging data from the imaging input interface and to orient and scale the imaging data according to a predetermined grid reference to generate corrected image data, and a classifier configured to process the corrected image data to segment the image, the classifier being further configured to match the object to one of the pre-classified objects in the classification database in dependence on the segments of the image and on the encoded data in the classification database, the classifier being further configured to identify and output differences between one or more segments of the image and the matched pre-classified object.

## Description

### Field of the Invention

The present invention relates to an object identification system and method that are particularly applicable for identifying malicious modifications to objects.

### Background to the Invention

In recent years, concern over malicious items smuggled onto planes, into public buildings etc has increased. It is not uncommon for people and their baggage to be scanned prior to entry in an attempt to identify threats such as explosives, blades and the like.

Typically, a machine, such as an x-ray or CT scanner, scans carry-on objects, like a bag, laptop, equipment, or a tray containing various items. Today's standard scanners across most airports use single-view x-ray technology, through which operators see a top-down view of baggage as it passes through the machine. Recent innovations in imaging hardware include multi-view x-rays, multi-spectral x-rays, and CT technology to provide 3-dimensional, or other multi-dimensional views of baggage. Using any of these technologies, human screening operators seek to find prohibited items including firearms, knives and other sharps, explosives, liquids, and other prohibited items.

The device captures an image of the baggage and its density and average atomic number. Based on atomic number, materials of concern are typically color-coded in the image to highlight potential threats and the color coded image is then displayed on a screen for an operator to review.

The majority of the scanning evaluation is done by human operators although there do exist operator assisted systems that look for threatening areas (e.g. very high-density regions that could be explosives).

The number of people travelling is ever increasing. Furthermore, there is a general desire to deploy similar technologies in other areas such as public buildings, high profile businesses and also at other transport hubs.

It is understood that humans are inherently poor at sporadic visual search of the type described above. One of the biggest slowdowns in the security lines is caused by an operator manually pausing the belt, re-scanning bags, and otherwise taking their time while scanning for threats. Furthermore, the amount of skilled/trained operators is a limiting factor on such systems.

### Statement of Invention

According to an aspect of the present invention, there is provided an object identification system comprising:
a classification database encoding data on each of a plurality of pre-classified objects
an imaging input interface configured to receive imaging data of an object from an imaging scanner, the imaging data including imaging data on internal components of the object;
an imaging processor configured to receive the imaging data from the imaging input interface and to orient and scale the imaging data according to a predetermined grid reference to generate corrected image data;
a classifier configured to process the corrected image data to segment the image, the classifier being further configured to match the object to one of the pre-classified objects in the classification database in dependence on the segments of the image and on the encoded data in the classification database, the classifier being further configured to identify and output differences between one or more segments of the image and the matched pre-classified object.

The object identification system may further comprise a user interface configured to receive a designation of an object from a user, the designation corresponding to one of the pre-classified objects in the classification database, the classifier being configured to match the object to the designated pre-classified object and identify and output differences between the segments of the image and the designated pre-classified object.

The user interface may be configured to receive a designation of a category, the classifier being configured to match the object to the pre-classified objects in the category and identify and output differences between the segments of the image and a closest pre-classified object.

Upon an object not being matched to one in the database, the system may be configured to apply the image data to a deep classification algorithm comprising a 3-layer architecture, the first two layers being configured to narrow the search space, the third layer comprising a convolutional neural network configured to show similarity between candidates in the narrowed search space and objects in the classification database.

The first and second layers may be selected from classifiers including Hu Invariants Matching classifiers and Shape and Pixel Intensity Matching classifiers. The third layer may comprise a Siamese convolutional neural network.

The imaging data may comprise imaging data for the object of differing energies, the classifier being further configured to subtract the images of the imaging data of corresponding energies and z effective to determine residual images.

The system may be configured to obtain largest connected segments using the residual images and extract features therefrom.

The imaging data may comprise imaging data from a high energy scan, imaging data from a low energy scan and z effective imaging data from a derived from the high and low energy scans, the system being configured to input the matched reference and trial device data into a trained residual convolutional neural network to predict residuals conducive of a threat.

The imaging data from the imaging scanner may be 3-dimensional, the system being configured to flatten the imaging data into a 2d image prior to processing by the imaging processor and classifier.

The system may be configured to determine summative and geometric features from the trial, matched reference, residual and LCC images, and input into a gradient boosting algorithm configured to determine the probability, based on the features, of the device being a threat.

According to another aspect of the present invention, there is provided a computer implemented object identification method comprising:
encoding, in a classification database encoding data on each of a plurality of pre-classified objects
receive at an imaging input interface imaging data of an object from an imaging scanner, the imaging data including imaging data on internal components of the object;
orienting and scaling the imaging data by an imaging processor according to a predetermined grid reference to generate corrected image data;
processing the corrected image data to segment the image, matching the object to one of the pre-classified objects in the classification database in dependence on the segments of the image and on the encoded data in the classification database, and identifying and outputting differences between one or more segments of the image and the matched pre-classified object.

The method may further comprise receiving, via a user interface, a designation of an object from a user, the designation corresponding to one of the pre-classified objects in the classification database, matching the object to the designated pre-classified object and identifying and outputting differences between the segments of the image and the designated pre-classified object.

The method may further comprise receiving, via the user interface, a designation of a category, matching the object to the pre-classified objects in the category and identify and output differences between the segments of the image and a closest pre-classified object.

Upon an object not being matched to one in the database, the method may comprise applying the image data to a deep classification algorithm comprising an image segmentation based CNN which identifies segments of the device x-ray images (high, low, z effective) that contain features conducive of an particular substance such as an explosive or other substance(s) of interest.

The first and second layers may be selected from classifiers including Hu Invariants Matching classifiers and Shape and Pixel Intensity Matching classifiers and the third layer may comprise a Siamese convolutional neural network.

The imaging data may comprises imaging data for the object of differing energies, the method further comprising subtracting the images of the imaging data of corresponding energies and z effective values to determine residual images.

The method may further comprise obtaining largest connected segments using the residual images and extracting features therefrom.

The imaging data method may comprise imaging data from a high energy scan, imaging data from a low energy scan and z effective imaging data derived from the high and low energy scans, the method further comprising inputting matched reference and scanned device images containing the high, low and z effective images into a trained convolutional neural network to predict residuals conducive of a threat.

The imaging data from the imaging scanner may be 3-dimensional, the method comprising flattening the imaging data into a 2d image prior to processing by the imaging processor and classifier.

Embodiments of the present invention seek to provide an object identification system and method that is not limited to particular sectors or object types and which can be trained to recognise normal and abnormal objects and in particular normal and abnormal electronic devices based on their components and their component layouts.

Preferred embodiments are directed to automated, computer-implemented object identification systems and methods that automatically classify objects from their materials, size, shape and subcomponent layout, materials, size and shape. Preferred embodiments build and/or reference a library of standard objects and seek to highlight objects that are presented that are non-standard. Although the object identification system can take inputs from many different input systems, a preferred embodiment receives inputs from x-ray or CT scanning systems. The object identification system can be operated independently of the x-ray/CT system and can be used alongside existing systems and existing human screening, either to provide guidance to the human operator in terms of additional mark-up/overlay on displayed scan images or else as a background system that is looking at other potential threats than the explosives/blades which are the concerns of the human operator.

### Key elements:

- The system enables the verification of whole objects via object matching, including all external and internal components.
- The system works on both 2d (x-ray) scanners and 3d (CT scanners).
- We have created a calibration technique that allows all images to be spatially corrected on a pixel level to ensure matching is accurate.
   ∘ This enables the algorithms to be used on almost any x-ray/CT scanner.
- By matching objects from a specific database, all significant differences can be identified.
   ∘ Differences are then analysed by a gradient boosting machine (GBM) or residual convolutional neural network (RCNN) to identify if a threat is present or not.
- Where an object is not in the database, but the object has distinguishable features we provide a method of identifying anomalies within unknown objects.

### Specific Industries:

- Aviation/Physical Security - explosives, narcotics, other concealments.
- Cyber security - electronic component concealments, counterfeit item identification.
- Manufacturing - object and package verification, detection of counterfeit, defective and modified parts.

Embodiments may operate in different environments, for example scanning objects/devices in trays, packages received from couriers etc.

### Embodiments may:

- identify and separate the tray/packaging in the same way as the embodiments below identify and separate devices.
- subtract the known tray/packaging from the separated tray image.
- This leaves a scan image containing only device(s) which can then be processed in the same way as in other embodiments.

Throughout this document, devices such as electronic devices are used as examples of the objects being scanned and identified. However, the approach can also be applied to other objects, with exactly the same technology. Where the object is uniform and expected to be seen again it can be stored in the database as per devices. Where not, the deep classification algorithm can be utilised to identify specific features that may themselves be indicators of threats. It will be appreciated that objects ranging from jewellery and shoes to computer components (hard drives, graphics cards etc), to portable devices and larger complex objects such as bicycles and vehicles could be the subject of scans.

The system may further comprise a user interface configured to receive a designation of an object from a user, the designation corresponding to one of the pre-classified objects in the classification database, the classifier being configured to match the object to the designated pre-classified object and identify and output differences between the segments of the image and the designated pre-classified object.

In addition to matching of unknown objects to pre-classified objects, embodiments preferably also support guided matching. For example, a user may state an object is a certain model of smartphone and the system may confirm whether there is a match to that model's pre-classified object in the database. Optionally, the system may give a percentage, traffic light style rating (green being match with high confidence, amber, match with low confidence, red being no match), or other score. It may be that a user can designate a more general category (all smartphones for a manufacturer etc). It may also be that multiple models exist (different memory configurations etc), each being pre-classified in the database but selectable by the user via a general designation.

For example, the user input may be the device name eg: "iphone 6"and the system performs the difference analysis in the same way as described.

If the additional input is used the system can generate the probability of device indeed being the device the user anticipates, difference etc in the same way. However, in this example only iphone 6 reference images in the database would be considered (this may include a few different model numbers).

It will be appreciated that embodiments of the present invention have a wider use case than replacement/augmentation of current threat detection systems. For example, embodiments may be deployed in the supply chain of organisations. They may, for example, be used to scan computing components for use in computer networks, telephony networks and the like. Upon receipt, a package can be scanned and the system used to identify the difference(s) between a packaged component and a pre-classified reference to highlight potential risks. The system may operate:
∘ Automatically, to identify the device and return the difference
∘ Based upon a device user input, produce the probability that the device in scanned matches the user input and produce the difference. (This can be helpful where devices are very similar.)
∘ *A combination of both of these.*

### Brief Description of the Drawings

Embodiments of the present invention will now be described by way of example only with reference to the accompanying drawings in which:
Figure 1 is a schematic diagram of an object identification system according to an embodiment;
Figures 2 to 5 are images showing potential inputs (Figures 2 and 3) and outputs (Figures 4 and 5) of the system of Figure 1.

### Detailed Description

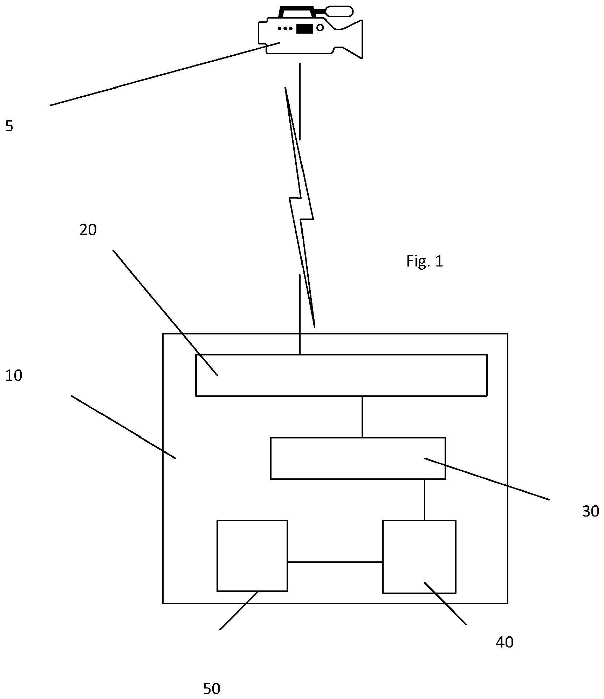

Figure 1 is a schematic diagram of an object identification system according to an embodiment.

The object identification system 10 includes an imaging input interface 20, an imaging processor 30, a classifier 40 and a classification database 50.

The classification database 50 encodes data on each of a plurality of pre-classified objects

The imaging input interface 20 is configured to receive imaging data of an object from an imaging scanner such as an X-ray scanner, gamma scanner, a CT scanner or the like. It passes the data to the imaging processor 30 which is configured to process the imaging data to orient and scale it to according to a predetermined grid reference, generating corrected image data.

The imaging processor 30 acts to ensure that imaging data is normalised and can be matched on a like-for like basis. It may take into account calibration information from the imaging scanner, knowledge of the imaging scanner type, brand etc. It may also consider the imaging data itself and apply image processing based on content identified in the image data and/or attributes of the image data to correct the image data for issues like distortion, rotation, scale, aperture.

Once the image data has been corrected, it is passed to a classifier 40. The classifier 40 may be a single computing system executing various processes discussed below or may be a series of systems that may be local or remote. The classifier 40 is configured to process the corrected image data to segment the image. The segments correspond to individual objects or object parts identifiable from the corrected image data. While in the ideal world all components would be separately segmented, it will be appreciated that this is dictated by what is discernible from the imaging data. Once segmented, the classifier 40 matches the object(s) to one of the pre-classified objects in the classification database. This is done in dependence on the segments of the image and on the encoded data in the classification database. Various ways of doing this are discussed below. If a match is found, the classifier identifies and outputs differences between the segments of the image and the matched pre-classified object. For example, if a component is missing or the battery replaced by something else, these would be alerted to the operator either visually by superimposing over the image of the object or else via an alarm, log file or other approach.

Where an object cannot be matched to one in the database 50, a deep classification algorithm described below may be used. The deep classification algorithm includes a classifier that has been trained on data containing features that the system should detect and is more accurate in classification than the approach initially taken by the classifier 40. It will, however, be appreciated that the deep classification algorithm could be operated in a stand-alone mode or in conjunction with other systems and without being limited to being used only on non-recognised objects.

In one embodiment, the database 50 encodes data on pre-classified objects including one or a number of scans of that device, name and optionally other data such as manufacturer, model, part number/code etc. These are reference images that the system can match to.

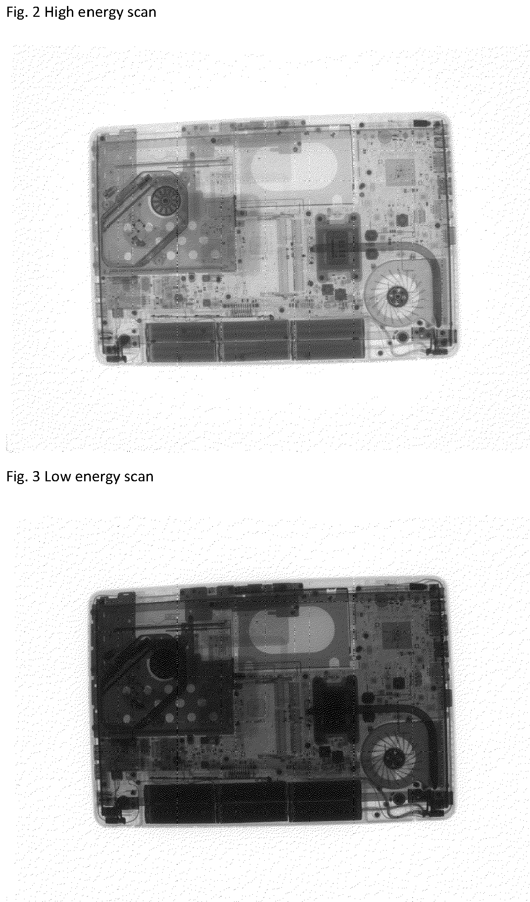

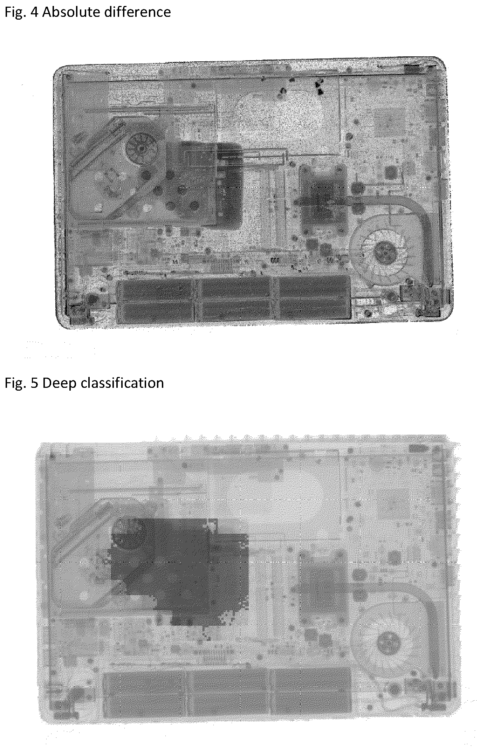

Figures 2 to 5 are images showing potential inputs (Figures 2 and 3) and outputs (Figures 4 and 5) of the system of Figure 1. In this example, the scanner is an x-ray scanner that provides high and low energy scans (Figures 2 and 3, respectively), a z effective image/array is produced from the high and low energy image arrays.

A z effective image is an image where locations in the image are represented by an effective atomic number calculated from the low and high energy scans. An example of how this is calculated is set out in Calculation of Effective Atomic Number and Normal Density Using a Source Weighting Method in a Dual Energy X-ray Inspection System by Park et al, Journal of the Korean Physical Society, Vol. 59, No. 4, October 2011, pp. 2709-2713.

The processing of the classification system results in a match to a pre-classified object and absolute differences to that object are shown in the red highlighted section of Figure 4. In an alternative or additional approach, a deep learning classifier (described below) could be applied and the results from this are shown in Figure 5, again with the anomalous area shown in red.

One example of the approach taken by the image processor 30 is set out below, although it will be appreciated that there are other image processing methods that could be applied.

Firstly, a mapping between the actual and 'restored' grid coordinates of the image data is identified. Once the mapping has been found, points in the image data are triangulated to form a mesh. Each triangle being used to find a local affine transformation. Pixel values are identified using bi-linear interpolation.
http://www.sci.utah.edu/∼acoste/uou/Image/project3/ ArthurCOSTE_Pr oject3.pdf (the content of which is incorporated by reference) contains details on this approach.

This correction is applied to all images that are generated from this x-ray/CT device to ensure images are spatially correct. A standard pixel/spatial reference is set to achieve this.

This correction can be utilised on both 2d and 3d images to correct for distortion and scale. Essentially this spatially corrects images so that the object within can be matched effectively.

The classifier 40 segments objects from the corrected image data. One way to segment objects is described below, although it will be appreciated that other approaches could also be taken. To segment an object, the corrected image data is thresholded (binarised). Using the binarised image, connected segments are then identified.

Preferably, segments under a predetermined area size are eliminated so that particularly small areas such as small air gaps etc do not result in irrelevant segments. The rest of segments are considered to be devices or objects or components of devices or objects (all referred to as objects below).

Images of objects are extracted based on the coordinates of minimum enclosing rectangle that surrounds each segment. Object-level features are extracted and preferably each object is converted into a data object.

In one embodiment, this data object is a custom written python class to handle device image data, keypoints, and many other features. https://escholarship.org/uc/item/7jg5d1zn (the content of which is incorporated by reference) describes the algorithm to find segments.

This approach can be utilised on both 2d and 3d images. In the case of 3d, for best effectiveness, the image data preferably includes a "top down" view of the 3d image that is used to segment the object.

Preferably, the classifier 40 uses a 3-layer-approach. The first two layers narrow the search space for the third one which preferably is Siamese CNN. The first two layers are preferably: Hu Invariants Matching, Shape and Pixel Intensity Matching.

Weighted Hu Invariants are extracted from an image of the object and find 5 best matches from our reference set. In the case of x-ray, low and high energy scans may be used. In other scanning technologies, multiple scanning modalities may be used to capture multiple scan images. The same principle is used with Shape and Pixel Intensity Matching. Euclidean distance is then used as a similarity metric in both layers to select candidates to be passed to the second and third layer.

The classifier is arranged such that the third layer (CNN) receives only ∼10 candidates for identification. The convolutional neural network does not predict the object model but rather shows the similarity between the trial and the reference. The network outputs values between 0 and 1, where 1 demonstrates perfect similarity between trial and reference. Other feature extractors could also or alternatively be used including VGG16, ResNet, YOLO.

Preferably a threshold value is set. Below this value we consider the device to be unknown.
https://ieeexplore. ieee.org/stamp/stamp.jsp?tp=&arnumber=8124469 (the content of which is incorporated by reference) discusses the Siamese CNN.
https://www.researchgate.net/publication/224146066_Analysis_of_Hu's _moment_invariants_on_image_scaling_and_rotation (the content of which is incorporated by reference) describes the theory behind Hu Invariant Moments.

Although the 3-layer approach described above is preferred, it will be appreciated that other approaches for classification are possible including only a Siamese CNN or only a standard CNN.

As indicated above, the 3-layer approach could be used independently, for example, without a reference database for threat identification on unknown objects. Such a system would operate as described above but without the attempt to classify the objects as a precursor. In independent operation, the segmented images derived from raw images of the scanning system are input to the first layer and a probability is output from the third layer.

As before, this step can be utilised on both 2d and 3d images. In the case of 3d, a "top down" view of the 3d image is used to identify the object. While top-down is mentioned here and below, it will be appreciated that other angles of scanning are possible.

Once the object has been identified, the classifier 40 aligns the image from the image data (the trial image) with the reference image. It may be rotated/scaled so that it is aligned with the reference. In a preferred embodiment, image alignment is based on SIFT keypoints. Alternatively, it may be based on matching the corner coordinates.

A transformation matrix is computed by matching the SIFT descriptors / corner coordinates.

Preferably, all the instances of the reference object in the database are used to find the best possible alignment. The best alignment is considered to have the minimum mean intensity of the residual image (reference - trial).
https://www.cs.ubc.ca/∼lowe/papers/ijcv04.pdf (the content of which is incorporated by reference) describes SIFT algorithm. https://ieeexplore.ieee.org/document/6396024 (the content of which is incorporated by reference) describes image alignment

This step is utilised to align 2d images however can also be utilised on a top view of a 3d dataset to align the images.

The classifier 40 then preferably subtracts the images of corresponding energies and z effective values An opening filter (erosion followed by dilation) is preferably applied with relatively small 5x5 kernel to remove noise. https://docs.opencv.org/trunk/d9/d61/tutorial_py_morphological_ops.h tml (the content of which is incorporated by reference) discusses postfiltering.

If the image is 3d this step may be applied by segmenting the image into slices and performing the same process on each slice.

Having obtained the residuals, a number of largest connected components (LCCs) are extracted.

First, the residual image is thresholded (binarised). An average threshold value is computed, preferably by several thresholding methods: Otsu's method, Li's Minimum Cross Entropy method, Ridler-Calvard method.

Once the binary images are obtained, using the same principle as in Device Segmentation the largest connected segments (LCCs) are obtained and features extracted from them. http://www.sciencedirect.com/science/article/pii/003132039390115D (the content of which is incorporated by reference) discusses minimum cross entropy thresholding https://en.wikipedia.org/wiki/Otsu%27s_method (the content of which is incorporated by reference) discusses Otsu's method https://ieeexplore.ieee.org/document/4310039 (the content of which is incorporated by reference) discusses Ridler-Calvard method

If the image is 3d this is applied by segmenting the image into slices and performing the same process on each slice.

Having done all the steps above and extracted device-level and LCC-level features, the system can predict whether a difference between the imaged object and the reference in the database is likely to be a threat.

From this point, a number of features are extracted which is dependent upon the threat detection process which can be either:
∘ GBM process
∘ RCNN process

### GBM process

In a preferred embodiment, a gradient boosting (GBM) algorithm is used to make a prediction (by outputting a value such as 0-1 or a percentage) as to if the device contains a threat or something which is benign.

In this process the following features are calculated (by performing geometric calculations) from the image in comparison to the reference:
- Features current device (device being scanned)
   ∘ Device area
   ∘ Convex area
   ∘ Eccentricity
   ∘ Equivalent diameter
   ∘ Euler number
   ∘ Extent
   ∘ Filled area
   ∘ Height
   ∘ Size
   ∘ Perimeter
   ∘ Max length
   ∘ Max width
   ∘ Min length
   ∘ Min width
   ∘ Solidarity
   ∘ Features from high energy image, low energy image and z effective image:
      ▪ Mean pixel value
      ▪ Standard deviation
- Features reference device (the matched device reference image)
   ∘ Device area
   ∘ Convex area
   ∘ Eccentricity
   ∘ Equivalent diameter
   ∘ Euler number
   ∘ Extent
   ∘ Filled area
   ∘ Height
   ∘ Size
   ∘ Perimeter
   ∘ Max length
   ∘ Max width
   ∘ Min length
   ∘ Min width
   ∘ Solidarity
   ∘ Features from high energy image, low energy image and z effective image:
      ▪ Mean pixel value
      ▪ Standard deviation
- Features from difference between reference and device image:
   ∘ Difference in terms of percentage from 1 to 10% (in increments - so 10 features for each image).
- Features from the largest connected component (the largest part of the image showing difference). On high, low and z effective difference images.
   ∘ Q
   ∘ Convex area
   ∘ Eccentricity
   ∘ Equivalent diameter
   ∘ Euler number
   ∘ Extent
   ∘ Filled area
   ∘ Height
   ∘ Hu moments
   ∘ Size
   ∘ Perimeter
   ∘ Max length
   ∘ Max width
   ∘ Min length
   ∘ Min width
   ∘ Solidarity

Once the features have be extracted, they input into the GBM which determines the probability, based on all the features, of the device being a threat. The output is a probability. The input features may be displayed within the GUI.

Like other boosting methods, gradient boosting combines "weak" learners into a single model in an iterative fashion. https://statweb.stanford.edu/∼jhf/ftp/trebst.pdf (the content of which is incorporated by reference) discusses Gradient Boosting https://en.wikipedia.org/wiki/Gradient boosting

### RCNN Process

In an alternative to GBM (or one that may be used in parallel), a residual based convolutional neural network (RCNN) may be used that accepts residuals of high, low and z effective images and outputs a value (0-1, or a percentage etc) on whether the object contains a threat or not.

In this process two tensors of shape (224,224,3) (Low, High, Z effective) rescaled to range [0,1] and input to the RCNN. One for the reference and another for the trial image.

The RCNN processes these inputs and directly outputs the threat area.

The output is Tensors of shape (224,224,1), which are predicted threat mask and class, which is an array of probabilities of a threat (0-1). These segments are normally classified by a specific threshold. The ratio (threat area to overall device size) or overall number of segments displayed above this threshold is typically used to classify if the device contains a threat or not.

**Training:** Training involved using a dataset with x-ray scan images of devices that were known which were both benign and contained labelled threats. Each device image containing a threat was paired with one of the benign images of the same type and input and the labelled data was utilised to train the RCNN as to the correct result.

This RCNN is an CNN trained on images with the threat/modification area explicitly labelled. The residual is calculated for each images and, using the labelled data the CNN is trained on residual showing a threat. The preferred CNN model is VGG16 although other CNN architectures can also be trained in the same method.

If the image is 3d this is applied by inputting the same device level and LCC features albeit for each slice.

Optionally, both the GBM and RCNN processes may be operated in parallel and their results combined/compared.

Optionally, the system may also output the absolute difference between the reference device and the image of the object being analysed. The algorithm analyses the aligned images pixel by pixel value and generates the difference.

If the image is 3d this is applied by segmenting the image into slices and performing the same process on each slice.

The Deep classifier model/algorithm is a Fully Convolutional Network (FCN). Such architecture can efficiently learn to make dense predictions for per-pixel tasks like semantic segmentation. In this embodiment three segments are predicted: background, device and threat.
The deep classifier takes as an input of 3 images (1 high energy, 1 low energy and 1 z effective, of the segmented device). The CNN takes these and outputs a suspected threat area.

As a backbone model (for the purpose of feature extraction) we preferably utilize pre-trained model VGG16. It is a deep neural network trained on millions of images and designed for image classification task. The FCN network may be trained from images segmented using the above described process. The anomaly area and classification are provided by the known device process described above in which known good device/object scan images are provided as annotated training data. Alternatively or additionally it may be trained using manually annotated images where the position of the threat is known. The preprocessing steps include the following:
- Segment the scan into a set of objects (as discussed above)
- Stack Low/High/Z-effective images of each device into a three-dimensional array
- Resize to 224x224x3 preserving the aspect ratio
- Normalize every channel to have values in range [0,1]

This model can be used for unknown objects or in conjunction with the main algorithm above.
https://arxiv.org/pdf/1605.06211.pdf (the content of which is incorporated by reference) discusses Fully Convolutional Network (FCN) http://www.image-net.org/challenges/LSVRC/ (the content of which is incorporated by reference) discusses ImageNet Visual Recognition Challenge.
https://neurohive.io/en/popular-networks/vgg16/ (the content of which is incorporated by reference) discusses VGG16 architecture.

If the image is 3d this is applied by inputting the entire 3 dimensional array of high, low and z-effective values in the FCN.

In the case of 3D imaging, such as is possible using CT machines, objects may be identified using Volumetric Object Recognition Using 3-D CNN. This produces a 3d array of density, in the form of a high energy and low energy array, within the identified object box. The 3d arrays for a given object box, containing for example a device such as a laptop is preferably then flattened into a 2d image and analysed in the same manor that 2d x-ray images are processed as discussed above.

Using the method, objects can be extracted from their environment (for example they may be scanned while within a bag, tray or other container that may also then be represented in the scan image). To achieve this, once identified, the object can be rotated and an array of its values can be extracted from the 3d array. The extracted 3d array is the flattened along its shortest edge, by taking the sum of all array values along the shortest axis.

The process for this is as follows:
- Electronic object identified in 3d space using Volumetric Object Recognition Using 3-D CNN.
- 3d array extracted of object within a "box".
- Shortest dimension identified.
- All density values along the shortest dimension of the array are summed (to give and overall density for the object).
- This produces effectively a 2d density image of the object similar to a 2d x-ray image.
- This is analysed in the same way as present with 2d x-ray images above, for both known and unknown devices.

This process preferably takes place for low energy and high energy arrays generated by the CT device.

There are two models in which the system typically operates in, unsupervised and auto-review. In unsupervised mode, the software runs automatically and an alarm is raised if a threat is detected.

In auto-review mode, the user can set the software to auto review a threat decision, therefore negating the need for them to attend unless there is an issue after review. In which case an alarm is raised.

Any x ray/CT device can be calibrated for use in providing imaging data using a calibration tool. A scan is taken of a plate with holes of equal spacing. These scans are utilised to spatially correct the image as previously discussed above.

In one embodiment, the classification can be reviewed by a review panel. A scan can be selected for review by the user by selecting "review" button in a front-end user interface. It is then communicated to a review team. In one embodiment, the system may include a review parameter. This is the number of reviews a scan must pass through before a decision is given. If one review result is "Inconsistency found" , this is the result returned.

If an object image is of sufficient quality the reviewer can add the object to the reference database. All reviewers (set number as previously described) must approve the device for databasing before it is added.

It will be appreciated that the reference database, containing "known" devices, may take various forms including a central or distributed file store, database (such as SQL or other relational or non-relational database types). It may be implemented using storage devices such as hard disks, random access memories, solid state disks or any other forms of storage media. It will also be appreciated that the processor discussed herein may represent a single processor or a collection of processors acting in a synchronised, semi-synchronised or asynchronous manner.

It is to be appreciated that certain embodiments of the invention as discussed below may be incorporated as code (e.g., a software algorithm or program) residing in firmware and/or on computer useable medium having control logic for enabling execution on a computer system having a computer processor. Such a computer system typically includes memory storage configured to provide output from execution of the code which configures a processor in accordance with the execution. The code can be arranged as firmware or software, and can be organized as a set of modules such as discrete code modules, function calls, procedure calls or objects in an object-oriented programming environment. If implemented using modules, the code can comprise a single module or a plurality of modules that operate in cooperation with one another.

Optional embodiments of the invention can be understood as including the parts, elements and features referred to or indicated herein, individually or collectively, in any or all combinations of two or more of the parts, elements or features, and wherein specific integers are mentioned herein which have known equivalents in the art to which the invention relates, such known equivalents are deemed to be incorporated herein as if individually set forth.

## Claims

1. An object identification system comprising:
a classification database encoding data on each of a plurality of pre-classified objects
an imaging input interface configured to receive imaging data of an object from an imaging scanner, the imaging data including imaging data on internal components of the object;
an imaging processor configured to receive the imaging data from the imaging input interface and to orient and scale the imaging data according to a predetermined grid reference to generate corrected image data;
a classifier configured to process the corrected image data to segment the image, the classifier being further configured to match the object to one of the pre-classified objects in the classification database in dependence on the segments of the image and on the encoded data in the classification database, the classifier being further configured to identify and output differences between one or more segments of the image and the matched pre-classified object.

2. The object identification system of claim 1, further comprising a user interface configured to receive a designation of an object from a user, the designation corresponding to one of the pre-classified objects in the classification database, the classifier being configured to match the object to the designated pre-classified object and identify and output differences between the segments of the image and the designated pre-classified object.

3. The object identification system of claim 2, wherein the user interface is configured to receive a designation of a category, the classifier being configured to match the object to the pre-classified objects in the category and identify and output differences between the segments of the image and a closest pre-classified object.

4. The object identification system of any preceding claim, wherein upon an object not being matched to one in the database, the system is configured to apply the image data to a deep classification algorithm comprising a 3-layer architecture, the first two layers being configured to narrow the search space, the third layer comprising a convolutional neural network configured to show similarity between candidates in the narrowed search space and objects in the classification database.

5. The object identification system of claim 4, wherein the first and second layers are selected from classifiers including Hu Invariants Matching classifiers and Shape and Pixel Intensity Matching classifiers.

6. The object identification system of claim 4 or 5, wherein the third layer comprises a Siamese convolutional neural network.

7. The object identification system of any preceding claim, wherein the imaging data comprises imaging data for the object of differing energies, the classifier being further configured to subtract the images of the imaging data of corresponding energies and z effective to determine residual images.

8. The object identification system of claim 7, wherein the system is configured to obtain largest connected segments using the residual images and extract features therefrom.

9. The object identification system of any preceding claim, wherein the imaging data comprises imaging data from a high energy scan, imaging data from a low energy scan and z effective imaging data from a derived from the high and low energy scans, the system being configured to input the matched reference and trial device data into a trained residual convolutional neural network to predict residuals conducive of a threat.

10. The object identification system of any preceding claim, wherein the imaging data from the imaging scanner is 3-dimensional, the system being configured to flatten the imaging data into a 2d image prior to processing by the imaging processor and classifier.

11. The object identification system of claim 7 or 8, wherein the system is configured to determine summative and geometric features from the trial, matched reference, residual and LCC images, and input into a gradient boosting algorithm configured to determine the probability, based on the features, of the device being a threat.

12. A computer implemented object identification method comprising:
encoding, in a classification database encoding data on each of a plurality of pre-classified objects
receive at an imaging input interface imaging data of an object from an imaging scanner, the imaging data including imaging data on internal components of the object;
orienting and scaling the imaging data by an imaging processor according to a predetermined grid reference to generate corrected image data;
processing the corrected image data to segment the image, matching the object to one of the pre-classified objects in the classification database in dependence on the segments of the image and on the encoded data in the classification database, and identifying and outputting differences between one or more segments of the image and the matched pre-classified object.

13. The computer implemented method of claim 12, further comprising receiving, via a user interface, a designation of an object from a user, the designation corresponding to one of the pre-classified objects in the classification database, matching the object to the designated pre-classified object and identifying and outputting differences between the segments of the image and the designated pre-classified object.

14. The computer implemented method of claim 13, further comprising receiving, via the user interface, a designation of a category, matching the object to the pre-classified objects in the category and identify and output differences between the segments of the image and a closest pre-classified object.

15. The computer implemented method of any of claims 12 to 14, wherein upon an object not being matched to one in the database, applying the image data to a deep classification algorithm comprising an image segmentation based CNN which identifies segments of the device x-ray images (high, low, z effective) that contain features conducive of an particular substance such as an explosive or other substance(s) of interest.
